# EUROPEAN PATENT APPLICATION

(11) **EP 1 783 934 A2**
(43) Date of publication of application: **09.05.2007**
(21) Application number: 06123202.1
(22) Date of filing: 30.10.2006
(51) Int. Cl.: H04H 7/00

(54) **Method and apparatus for mixing audio signals included in plural DMB/DAB services**

(30) Priority: 08.11.2005 KR 20050106670
(71) Applicant: Samsung Electronics Co., Ltd., Suwon-si, Gyeonggi-Do (KR)
(72) Inventor: Shim, Hyo-sun, Seongnam-si Gyeonggi-do (KR)
(74) Representative: Perkins, Dawn Elizabeth

(57) **Abstract**

A method and an apparatus are provided for mixing and outputting plural audio signals included in plural services of a DMB/DAB device. The method includes receiving a DMB/DAB broadcast signal, outputting audio of a first service by extracting the first service from the received broadcast signal, selecting audio of a second service by extracting information of the second service from the received broadcast signal, mixing audio signals of the first and second services, and outputting the mixed signal.

## Description

The present invention relates to a digital multimedia broadcasting and, more particularly, to a method and an apparatus for mixing and outputting plural audio signals included in plural services in DMB/DAB devices.

As mobility of digital devices has improved, research on digital multimedia broadcasting (DMB) and digital audio broadcasting (DAB), which enable users to receive broadcasts of multimedia via mobile devices, is being conducted. Digital multimedia broadcasting (DMB) is a digital radio transmission system for sending multimedia, such as radio, TV and data, to mobile devices, such as mobile phones, laptops and portable multimedia devices. The term DMB is coined by the Korea Broadcasting Commission (KBC) and Ministry of Information Communication (MIC), and is based on the digital audio broadcast (DAB) standard. In the "comprehensive plan for digital broadcast (digital media center (DMC), data broadcast, and DMB)" announced in 2003, the Korean Broadcasting Commission (KBC) defined DMB as "a digital multimedia broadcast that can provide CD-quality and image-quality data, and high-quality non-mobile and mobile data transmissions" and classifies DMB into ground wave or terrestrial DMB (T-DMB) and satellite DMB (S-DMB) according to the transmission means (ground wave or satellite transmission). "Multi-channel", "multimedia", and "mobility" are properties of DMB and DAB.

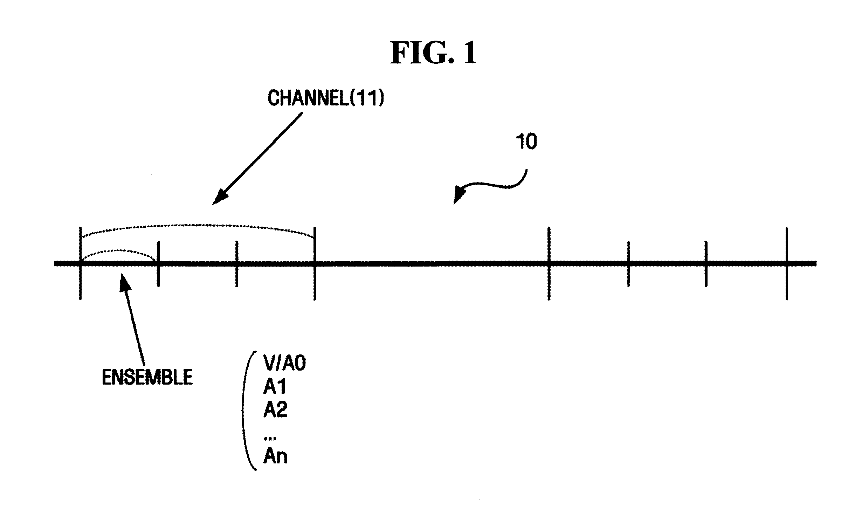

Typically, DMB/DAB receivers can receive video, audio, and data signals of several channels. Figure 1 depicts a composition of DMB (multimedia/mobile TV) channels. As shown in Figure 1, in a frequency band, DMB channel 10 includes a single channel 11 used by several ensembles. A single ensemble can be practically used by a specific broadcasting station, and includes a video signal V and several audio signals A0, A1, A2 ...An. That is, several audio signals are included in one or more ensembles or channels in a DMB frequency. As a result, various different services can be embedded into a single ensemble, including, for example, radio stations, sports commentaries and other data services.

However, in conventional DMB/DAB systems, only a single audio signal can be output at a time. As a result, output of an audio signal output via a speaker has to be stopped when another audio signal is to be output. However, a user may want to listen to other audio or news, or music and news together. Therefore, there is a need for a new method and an apparatus for outputting several audio signals together in such a DMB/DAB system.

Several aspects and example embodiments of the present invention provide a method and apparatus to mix and output plural audio signals in a single DMB/DAB device so as to enable a user to listen to different audio signals without stopping viewing a specific broadcast.

Additional aspects and/or advantages of the invention will be set forth in part in the description which follows and, in part, will be obvious from the description, or may be learned by practice of the invention.In accordance with an embodiment of the present invention, there is provided a method of mixing and outputting audio signals included in plural services in a DMB/DAB device. Such a method comprises receiving DMB/DAB broadcast signals; outputting an audio of a first service by extracting the first service from the received broadcast signals; selecting an audio of a second service by extracting information of the second service from the received broadcast signals; mixing audio signals of the first and second services; and outputting the mixed signals.

In accordance with another embodiment of the present invention, a broadcast-receiving device is provided with a broadcast receiving unit arranged to receive a DMB/DAB signal and extract information of a first service from the received broadcast signal; an output unit arranged to output an audio signal of services included in the received broadcast signal; and a mixing unit arranged to mix plural audio signals, wherein the broadcast receiving unit extracts information of a second service from the service information according to a predetermined input condition, the mixing unit mixes audio signals of the first and second services and generates mixed signals to an output unit for output.

According to an aspect of the present invention, a display unit is further arranged to provide a visual display of service information extracted from the broadcast receiving unit.

According to another aspect of the present invention, the broadcast receiving unit is configured to search the received broadcast signals supporting audio in the received broadcast signals, and output audio of a third service found in the received broadcast signals to the output unit for a predetermined time. Such a broadcast receiving unit also automatically outputs audio of a fourth service found in the received broadcast signals for another predetermined time after the predetermined time has lapsed.

According to an aspect of the present invention, the broadcast receiving unit is provided with one or more tuners arranged to tune in the received broadcast signals, and when the first and second services are in the same ensemble, the audio signals of the first and second services are received, via the same tuner.

According to an aspect of the present invention, a decoding unit is further arranged to decode the audio signals of the first service, and the audio signals of the second service; and the mixing unit further generates decoded audio signals as PCM data.

According to another aspect of the present invention, the mixing unit is further configured to mix audio signals of the first and second services according to a predetermined volume ratio. Alternatively, such a mixing unit also mixes audio signals of the first and second services in order to be separately output signals, via left and right speakers.

According to an aspect of the present invention, the output unit is configured to allow the user to stop output of audio signals of the first service and the second service.

In addition to the example embodiments and aspects as described above, further aspects and embodiments will be apparent by reference to the drawings and by study of the following descriptions.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
Figure 1 depicts a composition of DMB channels;
Figure 2 illustrates an example DMB/DAB device according to an embodiment of the present invention;
Figure 3 is a flowchart of receiving, mixing and outputting plural audio signals included in plural DMB devices according to an embodiment of the present invention;
Figure 4 illustrates an output of audio signals of two services according to an example embodiment of the present invention;
Figure 5 illustrates an output of audio signals of two services according to another example embodiment of the present invention.

Advantages and features of the present invention and methods of accomplishing the same may be understood more readily by reference to the following detailed description of the example embodiments and the accompanying drawings. The present invention may, however, be embodied in many different forms and should not be construed as being limited to the example embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention is also described with reference to flowchart illustrations of user interfaces, methods, and computer program products according to embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded into a computer or other programmable data processing apparatus to cause a series of operational steps to be performed in the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in reverse order, depending upon the functionality involved. Before the detailed description is set forth, terms used in this specification will be described briefly. Description of terms is provided for a better understanding of the specification, and terms that are not explicitly defined herein are not intended to limit the broad aspect of the invention.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside in the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

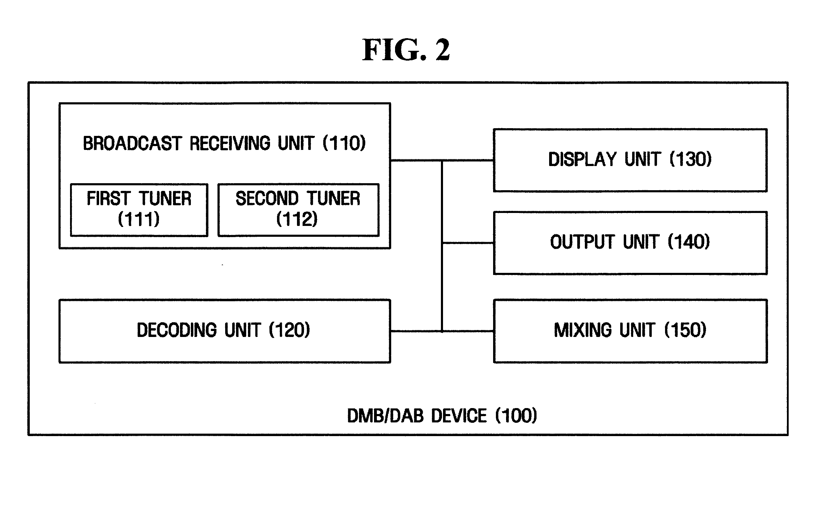

Figure 2 illustrates an example DMB/DAB device for use in a DMB/DAB system according to an example embodiment of the present invention. Such a DMB/DAB device 100 can be any mobile and portable multimedia device, such as a mobile phone, a notebook computer, a personal digital assistant (PDA), a PMP, and a HPC. Alternatively, the DMB/DAB device 100 can also be incorporated into a main device which can be any mobile multimedia device, including, for example, a mobile phone, a notebook computer, a PDA, a PMP and a HPC.

As shown in Figure 2, the DMB/DAB device 10 comprises a broadcast receiving unit 110, a decoding unit 120, a display unit 130, an output unit 140 and a mixing unit 150.

The broadcast receiving unit 110 receives service information included in a DMB/DAB signal, and extracts information on a first service from the service information. The DMB /DAB signal may include, for example, at least one of video data, audio data, and/or additional information data, which are divided into transmission packets each having a predetermined unit size. The video data and audio data may be data compressed by a video compression scheme, such as MPEG-4 (Moving Picture Experts Group-4) and AVC (Advanced Video Coding), or an audio compression scheme, such as MP3 (MPEG Layer-3) and AC3 (Audio Compression 3). The additional information data may include caption data relative to the video data or audio data, and other broadcasting information.

The broadcast receiving unit 110, which includes, for example, an antenna (not shown) to receive a DMB/DAB signal, and tuners 111 and 112 to perform channel tuning operations, extracts and outputs a specific channel or a specific ensemble. If the broadcast receiving unit 110 extracts plural audio services in different ensembles, plural tuners 111 and 112 may be used. However, if the broadcast receiving unit 110 selects and outputs two of several audio signals in a single ensemble, only one tuner may be used.The decoding unit 120 decodes the input audio signal. Compressed audio signals are likely to be transmitted as compressed, and therefore the audio signals are to be decoded. The decoding unit 120 provides a decoding method corresponding to standard compression schemes, such as MPEG4 and AVC. Alternatively, such a decoding unit 120 may be a combined decoder arranged to decode compressed audio signals. In addition, the decoding unit 120 may also include a video decoder (not shown) and an audio decoder (not shown) which decode the video signal and the audio signal from the broadcast receiving unit 110, respectively. Such a video decoder may be implemented according to a video compression scheme, such as MPEG-4. Likewise, the audio decoder may be implemented according to an audio compression scheme, such as MP3 and AC3. Furthermore, a data decoder may also be included to decode the additional information signal provided from the broadcast receiving unit 110. The additional information may include caption data, channel number, channel name, broadcasting data, broadcasting start time, etc., and may be displayed by the display unit 130.

The display unit 130, which is embodied as a liquid crystal display (LCD) or an organic light emitting diode (OLED), provides a visual display of broadcast information or video signals.

The output unit 140, which is included in the DMB/DAB device, outputs audio signals. Audio information may be output, via one or more speakers. In other words, the output unit 140 may include one or more speakers, for example, two speakers for stereo broadcasting and a woofer.

The mixing unit 150 mixes plural audio signals, and then outputs a single mixed audio signal. In an example embodiment, as shown in Figure 2, the decoding unit 120 and the mixing unit 150 may be separate components. However, the mixing unit 150 and the decoding unit 120 may be combined or integrated into a single unit. Hence, the mixing unit 150 can generate a decoded audio signal, e.g., PCM data, which can be output, via a speaker.

The broadcast receiving unit 110 receives broadcast service information as described above. If a user selects a different audio signal or searches for a broadcast service including audio signals while a first audio signal is output, the broadcast receiving unit 110 extracts information on a second service from the broadcast service information.

The mixing unit 150 mixes plural audio signals extracted by the broadcast receiving unit 110, and generates the mixed audio signals to the output unit 140. If there is a predetermined volume ratio for plural audio signals when audio signals are mixed, the mixing unit 150 mixes audio signals according to the volume ratio. For example, if the volume ratio is set to output 80% of a first audio signal and 20% of a second audio signal, the mixing unit 150 may mix the audio signals so that the volume of the first audio signal is loud and the volume of the second audio signal is low. If the output unit 140 is provided with multiple audio components, such as speakers and woofers, the audio signals may be allocated to each of the audio components and output therein respectively. For example, if there are left and right stereo speakers 140, it is possible to output the first audio signal, via a left stereo speaker and the second audio signal, via a right stereo speaker.

The broadcast receiving unit 110 outputs the received service information to the display unit 130 so that a user can select an audio service. A user can select two audio signals of the output audio service. A user can select a different audio signal, while a single audio signal is output.

In addition, the broadcast receiving unit 110 provides a pre-listening function so that a user can search for predetermined audio services sequentially. To search for other audio services exempting the main audio signal, the broadcast receiving unit 110 may output audio information on the other services for a predetermined time, such as 10 or 20 seconds.

If a specific audio signal is selected while a certain service is being output, the broadcast receiving unit 110 substitutes the audio signal for the main audio signal, or outputs the audio signal mixed with the main audio signal.

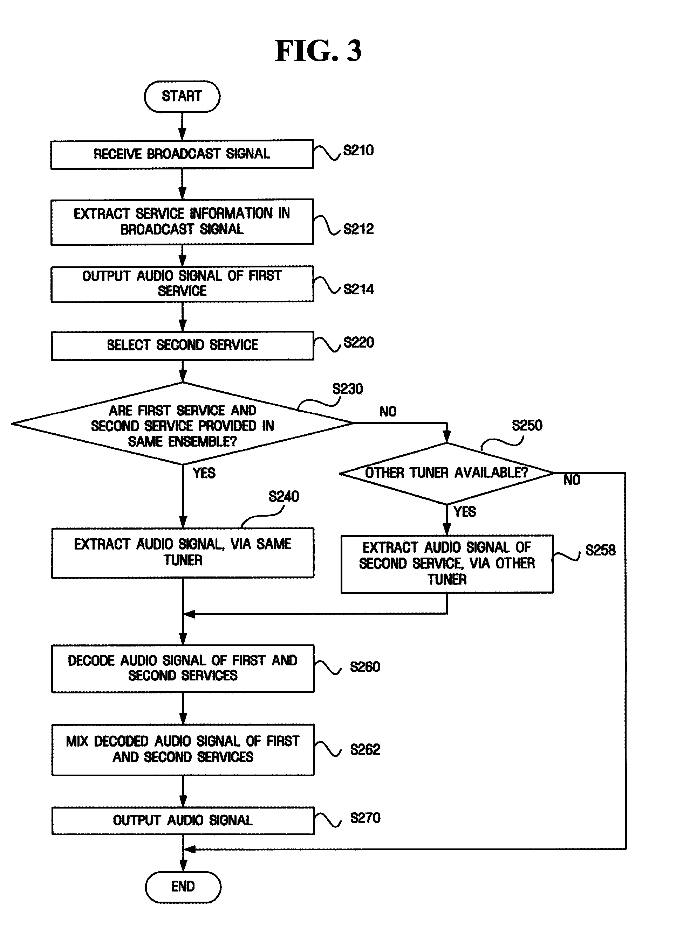

Figure 3 is a flowchart that shows mixing and outputting plural audio signals included in plural DMB/DAB devices according to an example embodiment of the present invention. As shown in Figure 3, the DMB/DAB device 100, as shown in Figure 2, receives a DMB/DAB signal, via the broadcast receiving unit at operation S210, and extracts service information of the received broadcast signal at operation S212. The service information may be transmitted by ensemble or channel. Here, the DMB/DAB device 100 outputs an audio signal of a first service at operation S214. A user may select another service, i.e., a second service, while listening to the audio signal of the first service at operation S220. Alternatively, a user may listen to audio services sequentially in order to search for desirable audio services in the DMB/DAB device 100. Such audio services are typically output in a predetermined order, e.g., ensemble or channel; at this time, the service-to-be-output may be the second service.

If the first service that a user is listening to and the second service selected by the user are in the same ensemble, an audio signal is extracted, via a single tuner. Accordingly, the DMB/DAB device 100 checks whether the first and second services are provided in the same ensemble at operation S230. If the first and second services are provided in the same ensemble, the DMB/DAB device 100 extracts audio signals, via the same tuner at operation S240. However, if the first and second services are not provided in the same ensemble at operation S230, the DMB/DAB device 100 checks whether another tuner is available to perform a tuning operation on the second service at operation S250. If the other tuner can be used, the DMB/DAB device 100 extracts audio signals of the second service, via the other tuner at operation S258. However, if the other tuner can be not used, the reception process is completed because the DMB/DAB device 100 cannot extract audio signals of the second service.

The DMB/DAB device 100 decodes the extracted audio signals of first and second services at operation S260, and mixes the decoded audio signals of first and second services at operation S262. If there is a predetermined volume ratio corresponding for outputting audio signals of first and second services, the DMB/DAB device 100 may control the intensity of signals-to-be-output. If the signals are output, via plural speakers, the DMB/DAB device 100 may mix the audio signals so that au audio signal of the first service is output to a left speaker, while an audio signal of the second service is output to a right speaker at operation S270.

Before operation S220, however, the DMB/DAB device 100 may display service information on a display window so that a user may select a service. In addition, the DMB/DAB device 100 may search for a service including audio signals, and display the result. For example, when a user searches for other broadcasts, while listening to a specific broadcast, the DMB/DAB device 100 searches for a broadcast service including audio signals, and outputs the searched broadcast services for about 10 seconds sequentially so that a user may listen to the changed broadcast.

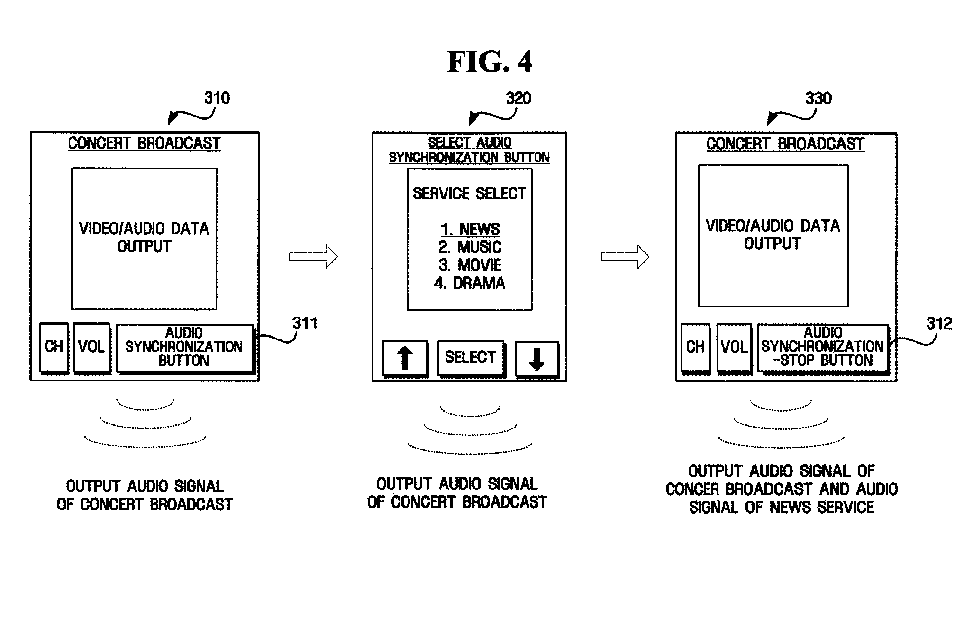

Figure 4 illustrates an output of audio signals of two services according to an example embodiment of the present invention.

A screen 310, as shown in Figure 4, represents a screen where a concert broadcast is displayed, via the display unit 130 of the DMB /DAB device 100. A moving picture of a concert broadcast and audio data are output to the DMB/DAB device 100. A user can control the broadcast channel and the volume, via a channel key and a volume key. When a user wants to listen to other audio services while viewing the broadcast, the user can select an audio synchronization button 311. As a result, the screen 310 is changed to another screen 320. In the screen 320, an audio signal of the concert broadcast is output, via the output unit 140 of the DMB/DAB device 100; at this time, a user can search for a list of services including other selectable audio signals. Example services provided may include (1) news, (2) music, (3) movie, and (4) drama.

If the user selects news, for example, a new screen 330 is provided by the display unit 130 of the DMB/DAB device 100, and the moving picture of the original concert broadcast is displayed on the screen 330. Also, it is possible to output the audio signal of the pre-output concert broadcast mixed with an audio signal of a news service. As such, a user can listen to the news, and view the concert broadcast. When interesting news is broadcasted, the user can view the news. An audio synchronization-stop button 312 can be used to stop the broadcast if the news is not interested.

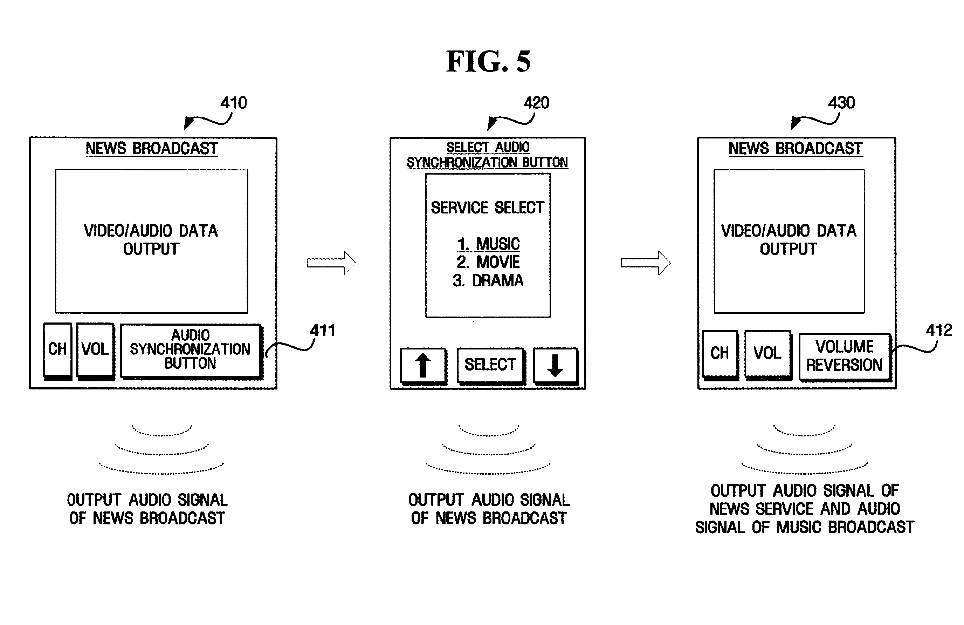

Figure 5 illustrates an output of audio signals of two services according to another example embodiment of the present invention. As described with reference to Figure 2 and Figure 3, the DMB/DAB device 100 may mix audio signals, and output the audio signals, via left and right speakers differently.

A screen 410, as shown in Figure 5, represents a screen where a news broadcast is displayed, via the display unit 130 of the DMB/DAB device100. A moving picture of a news broadcast and audio data are output to the DMB/DAB device 100. A user can control a broadcast channel and a volume, via a channel key and a volume key. When a user wants to listen to other audio services while viewing the broadcast, the user selects an audio synchronization button 411. As a result, the screen 410 is changed to another screen 420. In the screen 420, an audio signal of the news broadcast is output, via the output unit 140 of the DMB/DAB device 100; at this time, a user can search for a list of services including other selectable audio signals. Example services provided may include (1) music, (2) movie, and (3) drama.

If the user selects music, for example, a new screen 430 is provided by the display unit 130 of the DMB/DAB device 100, and the moving picture of the original news broadcast is displayed on the new screen 430. At this time, it is possible to output audio of the news service loudly, and audio of the music service as background music. A user can make the music louder using a volume turnover button 412.

According to the present invention, the method and the apparatus can mix and output plural audio signals in a single DMB/DAB device so as to enable a user to listen to other audio signals without stopping viewing a specific broadcast, thereby increasing a user's convenience.

Various components of the digital broadcasting transmission system, as shown in Figure 2, can be implemented in hardware, such as, for example, an application specific integrated circuit (ASIC); however, where appropriate, software, hardware, or a combination thereof can be utilized. In particular, software modules can be written, via a variety of software languages, including C, C++, Java, Visual Basic, and many others. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

While there have been illustrated and described what are considered to be example embodiments of the present invention, it will be understood by those skilled in the art and as technology develops that various changes and modifications, may be made, and equivalents may be substituted for elements thereof without departing from the scope of the present invention as defined in the appended claims. Many modifications, permutations, additions and sub-combinations may be made to adapt the teachings of the present invention to a particular situation without departing from the scope thereof. For example, the decoding unit 120 and the mixing unit 150 can be implemented as a single control unit to perform functions as described in addition to controlling operation of the DMB/DAB device 100, as shown in Figure 2. In addition, the broadcast receiving unit 110 can be configured to convert a broadcast signal, which is a RF signal, into an intermediate signal (IF) signal for baseband signal processing. Alternative embodiments of the invention can be implemented as a computer program product for use with a computer system. Such a computer program product can be, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or nonvolatile, such as semiconductor, magnetic, optical or other memory device. Furthermore, the software modules as described can also be machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Accordingly, it is intended, therefore, that the present invention not be limited to the various example embodiments disclosed, but that the present invention includes all embodiments falling within the scope of the appended claims.

## Claims

1. A method of mixing and outputting plural audio signals included in plural services in a DMB/DAB device, the method comprising:
receiving DMB/DAB broadcast signals;
extracting information of a first service from the received broadcast signals and
outputting an audio signal of the first service;
extracting information of a second service from the received broadcast signals and
selecting the second service;
mixing audio signals of the first service and the second service; and
outputting mixed signals.

2. The method as claimed in claim 1, further comprising:
extracting and displaying service information included in the received broadcast signals before selecting the second service.

3. The method as claimed in claim 1 or 2, further comprising:
searching the received broadcast signals for a service supporting audio; and
outputting audio of a third service found in the received broadcast signals for a predetermined time.

4. The method as claimed in claim 3, further comprising:
after passing the predetermined time, automatically outputting audio of a fourth service found in the received broadcast signals for a predetermined time.

5. The method as claimed in any one of the preceding claims, wherein, if the first and second services are in the same ensemble, the audio signals of the first and second services are received, via the same tuner.

6. The method as claimed in any one of the preceding claims, wherein the audio signals of the first service and the second service are mixed by:
extracting and decoding audio signals of the first service;
extracting and decoding audio signals of the second service; and
generating the decoded audio signals as PCM data.

7. The method as claimed in any one of the preceding claims, wherein the audio signals of the first and second services are mixed according to a predetermined volume ratio.

8. The method as claimed in any one of the preceding claims, wherein the audio signals of the first and second services are mixed in order to be separately output, via left and right speakers.

9. The method as claimed in any one of the preceding claims, further comprising:
stopping output of audio signals of the first service and outputting audio signals of the second service.

10. A broadcast receiving device comprising:
a broadcast receiving unit (110) arranged to receive DMB /DAB broadcast signals and extract service information from the received broadcast signals;
an output unit (140) arranged to output audio signals of services included in the received broadcast signals; and
a mixing unit (150) arranged to mix audio signals of first and second services and
generate mixed signals to the output unit (140) for simultaneous output.

11. The device as claimed in claim 10, further comprising:
a display unit (130) arranged to provide a visual display of service information extracted from the broadcast receiving unit (110).

12. The device as claimed in claim 10 or 11, wherein the broadcast receiving unit (110) searches received broadcast signals supporting audio from the received broadcast signals, and outputs audio of a third service found in the received broadcast signals to the output unit (140) for a predetermined time.

13. The device as claimed in claim 12, wherein the broadcast receiving unit (110) automatically outputs audio of a fourth service found in the received broadcast signals for another predetermined time after the predetermined time has lapsed.

14. The device as claimed in any one of claims 10 to 13, wherein the broadcast receiving unit (110) includes:
one or more tuners (111, 112) arranged to tune in the received broadcast signals, and
when the first and second services are in the same ensemble, the audio signals of the first and second services are received, via the same tuner (111, 112).

15. The device as claimed in any one claims 10 to 14, further comprising:
a decoding unit (120) arranged to decode the audio signals of the first service, and
the audio signals of the second service,
wherein the mixing unit (150) generates decoded audio signals as PCM data.

16. The device as claimed in any one of claims 10 to 15, wherein the mixing unit (150) mixes audio signals of the first and second services according to a predetermined volume ratio.

17. The device as claimed in any one of claims 10 to 16, wherein the mixing unit (150) mixes audio signals of the first and second services in order to be separately output signals, via left and right speakers.

18. The device as claimed in any one of claims 10 to 17, wherein the output unit (140) stops output of audio signals of the first service and audio signals of the second service.

19. A mobile device comprising:
a broadcast receiving unit (110) arranged to receive DMB /DAB broadcast signals, and obtain service information from the broadcast signals; and
a controller arranged to control output of an audio signal of a first service, to enable a user to select a second service without stopping output of the audio signal of the first service, to control decoding and mixing of audio signals of the first service and
the second service when the service is selected by the user for output, via one or more speakers.

20. The mobile device as claimed in claim 19, wherein the broadcast receiving unit (110) comprises first and second tuners (111, 112) to tune in the frequency of the broadcast signals, and wherein, prior to mixing audio signals of the first and second services, the controller is further configured to determine whether the first and second services are provided in the same ensemble; extract an audio signal of the second service, via the first tuner (111), when the first and second services are provided in the same ensemble; and extract an audio signal of the second service, via the second tuner (112), when the first and second services are not provided in the same ensemble.

21. The mobile device as claimed in claim 19, further comprising:
a decoding unit (120) arranged to decode the audio signals of the first and second services; and
a mixing unit (150) arranged to mix decoded audio signals of the first and second services according to a predetermined volume ratio.

22. The mobile device as claimed in claim 19, further comprising a display unit (130) arranged to provide a visual display of service information extracted from the broadcast signals.
